**Europäisches Patentamt**

(19) **European Patent Office**

**Office européen des brevets**

(11) Veröffentlichungsnummer: **0 048 360**
**B1**

(12) # EUROPÄISCHE PATENTSCHRIFT

(45) Veröffentlichungstag der Patentschrift:
**24.10.84**

(51) Int. Cl.³: **B 01 J 2/04,** G 21 C 3/62

(21) Anmeldenummer: **81106882.4**

(22) Anmeldetag: **03.09.81**

(54) **Verfahren und Vorrichtung zur Herstellung von Mikrokugeln durch interne Gelierung von Mischfeed-Tropfen.**

(30) Priorität: **23.09.80 DE 3035845**

(43) Veröffentlichungstag der Anmeldung:
**31.03.82 Patentblatt 82/13**

(45) Bekanntmachung des Hinweises auf die Patenterteilung:
**24.10.84 Patentblatt 84/43**

(84) Benannte Vertragsstaaten:
**BE CH FR GB IT LI NL**

(56) Entgegenhaltungen:
**DE - A - 2 822 370**
**FR - A - 2 392 471**
**GB - A - 1 407 978**

(73) Patentinhaber: **Gesellschaft zur Förderung der industrieorientierten Forschung an den Schweizerischen Hochschulen und weiteren Institutionen, Wildhainweg 21, CH-3012 Bern (CH)**

(72) Erfinder: **Jungo, Charles, Dr., Bodenächerstrasse 16, CH-5417 Untersiggenthal (CH)**
Erfinder: **Ledergerber, Guido, Plattenweg 261, ·CH-5223 Riniken (CH)**

(74) Vertreter: **Patentanwaltsbureau Scheidegger, Zwicky & Co., Stampfenbachstrasse 48 Postfach, CH-8023 Zürich (CH)**

**Beschreibung**

Die Erfindung betrifft ein Verfahren zur Herstellung von aus wenigstens einer Verbindung eines Metalls mit einem Nichtmetall, insbesondere Sauerstoff, Kohlenstoff und/oder Stickstoff, bestehenden Mikrokugeln durch interne Gelierung von Tröpfchen einer Mischfeedlösung, die in einer konzentrierten Metallsalzlösung einen Ammoniak-Donator, insbesondere Hexamethylentetramin, enthält, sowie eine Vorrichtung zur Ausführung des Verfahrens.

Bei dem Verfahren der internen Gelierung wird von der sogenannten Mischfeedlösung ausgegangen, die üblicherweise durch Zumischen von z.B. Hexamethylentetramin zu einer gesättigten Metallnitratlösung bereitet wird. Die Mischung bleibt flüssig, solange sie gekühlt wird, z.B. auf —5°C, und bildet ein Gel, wenn sie erwärmt wird.

Zur Herstellung von Mikrokugeln wird die gekühlte Mischfeedlösung in Tropfen von möglichst gleichmässiger Grösse zerteilt, und die Tropfen werden in eine heisse, hydrophobe Flüssigkeit, wie z.B. Silikonöl, eingebracht, wo sie infolge starker pH-Erhöhung durch die Bildung von Ammoniak aus dem Hexamethylentetramin sehr rasch erstarren. Dann wird von den erstarrten Gel-Mikrokugeln die anhaftende hydrophobe Flüssigkeit mit einem chlorierten Kohlenwasserstoff entfernt, und daran anschliessend werden die Gel-Mikrokugeln in einer Ammoniak-Lösung, vorzugsweise in einem Gegenstromverfahren, gewaschen, um aus ihnen die löslichen Verbindungen, wie Ammonnitrat, Hexamethylentetramin und Harnstoff, herauszulösen.

Das Verfahren der internen Gelierung wird häufig, aber nicht ausschliesslich zur Herstellung von keramischen Kernbrennstoffen in Form von Mikrokugeln angewendet. Für einen solchen beispielsweise Uran-Plutonium-Kernbrennstoff kann die Mischfeedlösung z.B. aus einer gesättigten wässrigen Lösung von Uranylnitrat und Plutoniumnitrat mit Zusätzen für die Verfestigungsreaktion, wie Hexamethylentetramin und Harnstoff, bestehen. Die verfestigten Gel-Mikrokugeln werden dann nach dem Auswaschen und gegebenenfalls nach einer Konditionierung in einer Wärmebehandlung in einer Gasatmosphäre bestimmter Zusammensetzung bei höherer Temperatur gesintert. Beim Sintern fällt zwar ein gewisser Anteil an unbrauchbaren, zerbrochenen oder Risse aufweisenden Mikrokugeln an, doch bietet ein solches nasschemisches Herstellungsverfahren für Kernbrennstoff gegenüber der Herstellung aus Pulvern erhebliche Vorteile, da kein strahlendes Material enthaltender Staub anfällt. Aber auch die nasschemische Herstellung von Kernbrennstoff muss in einem Strahlenschutzraum vorgenommen werden und dabei zeigt sich, dass insbesondere die Gelierung der Tropfen in der heissen hydrophoben Flüssigkeit noch Anlass zu Schwierigkeiten und aufwendigen Sicherheits- und Vorsichtsmassnahmen ist.

Es war Aufgabe der Erfindung, ein Verfahren und eine Vorrichtung zur Herstellung von Mikrokugeln der vorstehend angegebenen Art zu schaffen, bei dem bzw. der die zur Verfestigung der Mischfeed-Tropfen notwendige Wärme ohne einen flüssigen Wärmeträger appliziert werden kann und der Gelierungsvorgang selbst besser steuerbar ist, um allfällige nachteilige Auswirkungen auf nachfolgende Behandlungen der Mikrokugeln, wie z.B. deren Sinterung, nach Möglichkeit auszuschliessen.

Die erfindungsgemässe Lösung dieser Aufgabe besteht in dem im unabhängigen Patentanspruch 1 gekennzeichneten Verfahren und der im unabhängigen Patentanspruch 6 gekennzeichneten Vorrichtung zur Ausführung des Verfahrens. Ein wesentlicher Vorteil der Erfindung besteht darin, dass bei der Herstellung von Mikrokugeln auch das Waschen mit chloriertem Kohlenwasserstoff entfällt.

Vorteilhafte Weiterbildungen der Erfindung sind in den abhängigen Ansprüchen 2 bis 5 für das Verfahren und in den abhängigen Ansprüchen 7 bis 10 für die Vorrichtung angegeben.

Im folgenden werden Einzelheiten der Erfindung sowie deren Vorteile anhand von Ausführungsbeispielen in Verbindung mit der beiliegenden Zeichnung näher erläutert. Auf der Zeichnung zeigen:

Fig. 1 in schematischer Darstellung die zur Erzeugung und Behandlung von Mischfeed-Tropfen wesentlichen Teile einer Vorrichtung zur Herstellung von Mikrokugeln nach der Erfindung, bei der die Mischfeed-Tropfen zur internen Gelierung frei durch einen Mikrowellen-Hohlraumresonator hindurchfallen, und

Fig. 2 ein Schaltschema für eine an den Hohlraumresonator angeschlossene Mikrowellen-Einrichtung nach der Erfindung.

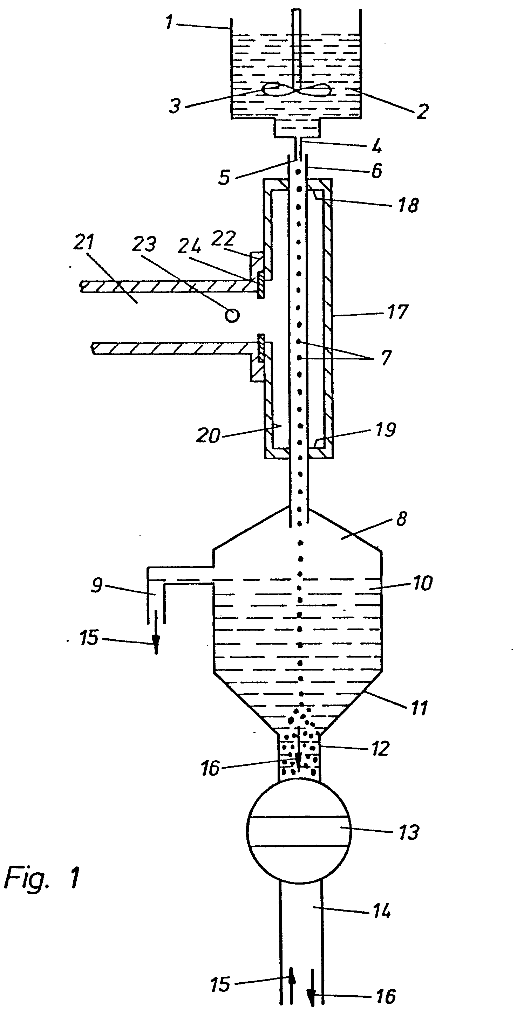

Wie aus Fig. 1 ersichtlich ist, weist eine bevorzugte Ausführung einer Vorrichtung zur erfindungsgemässen Herstellung von Mikrokugeln ein auf eine im wesentlichen konstante Temperatur von z.B. —5°C kühlbares Vorratsgefäss 1 für eine Mischfeedlösung 2 auf, das einen motorangetriebenen Rührer 3 enthält und mit einem bodenseitigen Tropfengenerator 4 herkömmlicher Bauart ausgerüstet ist. An den Tropfengenerator 4 schliesst ein Kunststoffrohr 6, z.B. aus Polytetrafluoräthylen, an, das lotrecht stehend und koaxial mit der Auslassöffnung 5 des Tropfengenerators 4 angeordnet ist, so dass vom Tropfengenerator 4 abgegebene Mischfeed-Tropfen 7 sich im freien Fall ohne Wandberührung durch das Kunststoffrohr 6 hindurch bewegen können. Das Kunststoffrohr 6 mündet unten in einem Auffanggefäss 8, das einen seitlichen Überlauf 9 hat und dessen konischer Boden 11 in einen durch ein Kugelventil 13 abschliessbaren Rohrstutzen 12 übergeht. An das Kugelventil 13 ist eine Waschkolonne 14 herkömmlicher Bauart, vorzugsweise eine Vibrobettkolonne, angeschlossen.

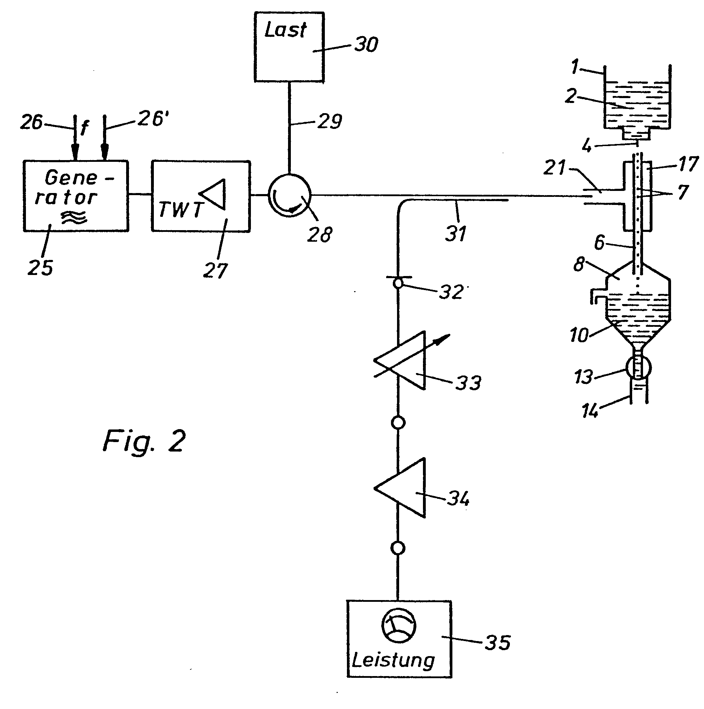

Das Kunststoffrohr 6 ist koaxial in einem Hohlraumresonator 17 angeordnet und durch dessen obere und untere Abschlusswand 18 bzw. 19 hindurchgeführt. An eine Seitenwand 20 des Hohlraumresonators 17 ist mittels eines Flansches 22 ein Hohlleiter 21 befestigt. Der Hohlleiter 21 enthält mindestens eine Anpassungsschraube 23 und ist über eine z.B. gemischte Blende 24 an den Hohlraumresonator 17 angekoppelt, wie dies aus der Mikrowellentechnik bekannt ist. Hohlraumresonator 17 und Hohlleiter 21 gehören zu einer Mikrowellen-Einrichtung, für die in Fig. 2 ein Blockschaltbild gezeigt ist und die noch näher beschrieben wird.

Erfindungsgemäss werden die vom Tropfengenerator 4 abgegebenen Mischfeed-Tropfen 7 im freien Fall auf einer vertikalen Strecke durch dielektrische Erwärmung im Strahlungsfeld stehender Mikrowellen aus dem X-Bandbereich auf die Gelierungstemperatur erhitzt. Die im Vorratsgefäss 1 befindliche Mischfeedlösung 2 enthält ausser dem bzw. den Metallsalz(en) die zur Verfestigung durch interne Gelierung nötigen Reaktionsstoffe, wie Hexamethylentetramin und Harnstoff, und der Tropfengenerator 4 erzeugt aus der Mischfeedlösung Tropfen von im wesentlichen gleicher Grösse. Im Betrieb wird im Hohlraumresonator 17 Mikrowellenenergie als stehende Welle gespeichert, wobei das Kunststoffrohr 6 im Hohlraumresonator 17 so angeordnet ist, dass die durch das Kunststoffrohr 6 fallenden Mischfeed-Tropfen 7 ein Gebiet einer maximalen elektrischen Feldkomponente durchqueren und Feldenergie durch dielektrische Verluste absorbieren. Diese Energieaufnahme bewirkt in den Mischfeed-Tropfen 7 eine rasche Temperaturerhöhung, die zur Auslösung der Gelierung führt. Die Gelierung der Mischfeed-Tropfen 7 muss im Mikrowellenfeld so weit fortgeschritten sein, dass die gelierten Mikrokugeln bei der nachfolgenden Behandlung nicht mehr beschädigt werden, d.h. dass die Fallstrecke im Mikrowellenfeld ausreichend lang und dementsprechend der Hohlraumresonator 17 mit dem Kunststoffrohr 6 entsprechend dimensioniert sein müssen. Das Kunststoffrohr 6 grenzt im Innenraum des Hohlraumresonators 17 einen verhältnismässig engen Behandlungsraum für die Mischfeed-Tropfen 7 ab, so dass im Hohlraumresonator 17 die gleiche Atmosphäre wie in der Umgebung vorhanden ist. Dieser enge, einen Strömungskanal darstellende Behandlungsraum schafft im allgemeinen für eine gleichmässigere Gelierung der Mischfeed-Tropfen günstigere thermische Verhältnisse als der im Vergleich dazu voluminöse Innenraum des Hohlraumresonators 17. Einen besonderen Vorteil erbringt das Kunststoffrohr 6 bei der Herstellung von Kernbrennstoff-Mikrokugeln, da allenfalls das Kunststoffrohr 6 im Innern durch strahlendes Material verunreinigt wird, nicht aber der Hohlraumresonator 17.

Das Auffanggefäss 8 enthält eine Waschflüssigkeit, z.B. eine wässrige Ammoniak-Lösung 10, in die die gelierten Mikrokugeln 7 aus dem Kunststoffrohr 6 hineinfallen, wobei — wie bereits erwähnt — die Mikrokugeln im Mikrowellenfeld bereits so weit geliert sind, dass sie beim Eintauchen in die Ammoniak-Lösung von dieser nicht mehr deformiert werden können. Aus dem Auffanggefäss 8 werden die Mikrokugeln kontinuierlich oder zyklisch der Waschkolonne 14 zugeführt, indem sie durch das eine Dosiereinrichtung darstellende und z.B. zyklisch betätigte Kugelventil 13 im Gegenstrom zur Ammoniak-Lösung der Waschkolonne 14 aufgegeben werden, wie es in Fig. 1 durch die Pfeile 15 für die Strömungsrichtung der Waschflüssigkeit und durch die Pfeile 16 für die Bewegungsrichtung der Mikrokugeln angedeutet ist.

Für eine bevorzugte Ausbildung der den Hohlraumresonator 17 enthaltenden Mikrowellen-Einrichtung ist in Fig. 2 ein Blockschaltbild wiedergegeben. Wie erwähnt, arbeitet die Mikrowellen-Einrichtung im X-Band, also mit Wellenlängen um 3 cm. Vorgesehen ist ein Mikrowellen-Generator 25 mit einer Ausgangsleistung im mW-Bereich, der von üblicher Bauart ist und eine Einstellvorrichtung 26 aufweist, mit der die Frequenz der erzeugten Mikrowelle innerhalb des X-Bandes wählbar ist. An den Mikrowellen-Generator 25 ist eine Wanderfeldröhre 27 (TWT) angeschlossen, die die abgegebene Leistung bis auf etwa 100 Watt verstärkt. Die verstärkte Mikrowelle wird über einen Zirkulator 28 durch den die Anpassungsschraube(n) 23 (Fig. 1) enthaltenden und mit der gemischten Blende 24 abgeschlossenen Hohlleiter 21 in den Hohlraumresonator 17 eingespeist. Der Zirkulator 28 verhindert, dass die im Hohlraumresonator 17 reflektierte Welle zurück in die Wanderfeldröhre 27 gelangt. Durch einen Seitenarm 29 des Zirkulators 28 wird die reflektierte Welle in eine Last 30 abgelenkt und dort vernichtet.

Der Hohlraumresonator 17 ist quaderförmig und für die Mode $TE_{10x}$ dimensioniert, wobei x einen Wert zwischen 11 und 21 hat. Der Hohlraumresonator 17 stellt den Verbraucher in der Mikrowellen-Einrichtung dar.

An dem Hohlleiter 21 ist ein Richtkoppler 31 angeschlossen, mit dem ein kleiner Teil der reflektierten Leistung entnommen wird. Der entnommene Teil an reflektierter Leistung ist über einen Hohlleiter-zu-Koaxial-Übergang 32 und zwei in Serie geschaltete koaxiale Attenuatoren 33 und 34, von denen einer variabel ist, zu einem Leistungsmessgerät 35 geführt.

Im Betrieb soll die Frequenz auf die Resonanzfrequenz des das mit Mischfeed-Tropfen 7 beladene Kunststoffrohr 6 enthaltenden Hohlraumresonators 17 abgestimmt werden. Für jeden speziellen Fall, also im wesentlichen für die jeweilige Zusammensetzung, Grösse und Aufeinanderfolge der vom Tropfengenerator 4 abgegebenen Mischfeed-Tropfen wird der Mikrowellen-Generator 25 zur Erzeugung einer Mikrowelle entsprechender Frequenz eingestellt. Hierzu wird mittels der Einstellvorrichtung 26 am Mikrowellen-Generator 25 die Frequenz der erzeugten Mikrowelle variiert und dabei das Leistungsmessgerät 35 beobachtet. Bei Resonanz hat die gemessene reflektierte Leistung ihr Minimum, und der Mikrowellen-Generator 25 bleibt dann auf die entsprechende Frequenz eingestellt. Dieses Einstellen nimmt nur wenig Zeit in Anspruch und erfolgt zweckmässig während des ohnehin üblichen Probelaufs.

In Versuchen wurde eine befriedigende Gelierung mit einem $TE_{10(11)}$-Hohlraumresonator erzielt, der wie folgt ausgebildet war:

Die Innenmasse des quaderförmigen, mit Silber beschichteten Hohlraumresonators 17 betrugen 22,86 mm × 10,16 mm × 156,79 mm. Der Hohlleiter 21, ein R 100 Element, war in der Mitte der einen schmalen Seitenfläche 10,16 mm × 156,79 mm angeflanscht. Die als LC-Parallelresonanzkreis wirkende gemischte Blende 24 hatte eine rechteckige Öffnung von 18,13 mm × 6 mm. Zur Impedanzanpassung zwischen Hohlleiter 21 und Hohlraumresonator 17 waren mehrere M 3 Schrauben in der Mitte der Breitseite des Hohlleiters 21 vorgesehen.

Ein solcher Hohlraumresonator hat unbeladen und ohne Kunststoffrohr 6 eine eigene Resonanzfrequenz von 12,4 GHz in der Mode $TE_{10(11)}$, und die Wellenlänge im Hohlraumresonator beträgt 2,85 cm.

In den Hohlraumresonator war ein Rohr 6 aus Polytetrafluoräthylen (Teflon®) mit einem Innendurchmesser von 8 mm und einem Aussendurchmesser von 10 mm eingesetzt. Mit einem solchen Kunststoffrohr 6 sinkt die Resonanzfrequenz auf 12,2 GHz, und der Qualitätsfaktor beträgt 30 000. Wenn das Kunststoffrohr 6 mit Tropfen aus einer wässrigen Mischfeedlösung beladen ist, tritt noch eine weitere, im allgemeinen geringfügige Änderung in der Resonanzfrequenz auf, und die Resonanzfrequenz beträgt z.B. beim Durchtropfen von Wasser etwa 12,19 GHz. Die für die Erwärmung der Tropfen massgebende Fallstrecke im Mikrowellenfeld beträgt hier demnach nur rund 15,6 cm. Diese verhältnismässig kurze Strecke ist jedoch ausreichend, um bei der vorstehend angegebenen Leistung von etwa 100 Watt freifallende Mischfeed-Tropfen auf eine die Gelierung gewährleistende Temperatur zu erhitzen.

## Patentansprüche

1. Verfahren zur Herstellung von aus wenigstens einer Verbindung eines Metalls mit einem Nichtmetall, insbesondere Sauerstoff, Kohlenstoff und/oder Stickstoff, bestehenden Gel-Mikrokugeln durch interne Gelierung von Tröpfchen einer Mischfeedlösung, die in einer konzentrierten Metallsalzlösung einen Ammoniak-Donator, insbesondere Hexamethylentetramin, enthält, wobei ein Strahl aus gekühlter Mischfeedlösung zu Tropfen von im wesentlichen gleicher Grösse zertropft wird, dadurch gekennzeichnet, dass die Mischfeed-Tropfen im freien Fall einem Strahlungsfeld stehender Mikrowellen im X-Bandbereich, das durch dielektrische Erwärmung die Gelierung auslöst, bis zu einem eine Deformation der Tropfen beim Hineinfallen in eine Flüssigkeit ausschliessenden Grade unterworfen werden und dass die so gelierten Tropfen zur weiteren Gelierung in eine Auffangflüssigkeit aus einer ausgewaschene Stoffe enthaltenden Waschflüssigkeit für die Gel-Mikrokugeln eingeleitet werden.

2. Verfahren nach Anspruch 1, dadurch gekennzeichnet, dass die Mischfeed-Tropfen im Strahlungsfeld durch ein Gebiet einer maximalen elektrischen Feldkomponente geführt werden.

3. Verfahren nach Anspruch 1 oder 2, dadurch gekennzeichnet, dass die Mischfeed-Tropfen im Strahlungsfeld durch einen von einem Kunststoffrohr umschlossenen engen Behandlungsraum geführt werden.

4. Verfahren nach einem der vorangehenden Ansprüche, dadurch gekennzeichnet, dass ein Strahlungsfeld in der $TE_{10x}$-Mode verwendet wird, wobei x einen Wert zwischen 11 und 21 hat.

5. Verfahren nach einem der vorangehenden Ansprüche, dadurch gekennzeichnet, dass die in der Waschflüssigkeit aufgefangenen Gel-Mikrokugeln im Gegenstrom in der Waschflüssigkeit gewaschen und anschliessend daran getrocknet werden.

6. Vorrichtung zur Ausführung des Verfahrens nach Anspruch 1, dadurch gekennzeichnet, dass zwischen der Auslassöffnung (5) eines Tropfengenerators (4) und einem in einer Entfernung darunter befindlichen Auffangefäss (8) ein Mikrowellen-Hohlraumresonator (17) mit je eine Öffnung aufweisender oberen und unteren Abschlusswand (18 bzw. 19) so angeordnet ist, dass vom Tropfengenerator (4) abgegebene Mischfeed-Tropfen (7) den Hohlraumresonator (17) im freien Fall durchqueren können, und der Hohlraumresonator (17) als der Verbraucher einer im X-Bandbereich arbeitenden Mikrowellen-Einrichtung (21...35) geschaltet ist.

7. Vorrichtung nach Anspruch 6, dadurch gekennzeichnet, dass der Hohlraumresonator (17) ein durch die Öffnungen in der oberen und unteren Abschlusswand (18 bzw. 19) geführtes Kunststoffrohr (6), vorzugsweise aus Polytetrafluoräthylen, enthält, das lotrecht und mit der Auslassöffnung (5) des Tropfengenerators (4) koaxial ausgerichtet ist und im Hohlraumresonator (17) einen Behandlungsraum für die durch das Kunststoffrohr (6) hindurchfallenden Mischfeed-Tropfen (7) abgrenzt.

8. Vorrichtung nach Anspruch 6 oder 7, dadurch gekennzeichnet, dass in der Mikrowellen-Einrichtung (21...35) mittels eines Richtkopplers (31) ein Teil der im Hohlraumresonator (17) reflektierten Leistung entnommen und über wenigstens einen Attenuator (33, 34) einem Leistungsmessgerät (35) zugeführt ist und dass die Mikrowellen-Einrichtung auf eine Betriebsfrequenz eingestellt ist, die im Hohlraumresonator (17) nur dann eine Resonanz ergibt, wenn der Hohlraumresonator (17) mit Mischfeed-Tropfen (7) beladen ist, wobei das Austreten von Resonanz am Leistungsmessgerät (35) durch ein Minimum an gemessener reflektierter Leistung feststellbar ist.

9. Vorrichtung nach einem der Ansprüche 6 bis 8, dadurch gekennzeichnet, dass die Mikrowellen-Einrichtung (21...35) einen Mikrowellen-Generator (25) mit einer Einstellvorrichtung (26, 26') zum Einstellen der Betriebsfrequenz und der Ausgangsleistung, eine Wanderfeldröhre (27) zur Verstärkung der von dem Mikrowellen-Generator (25) abgegebenen Leistung und einen der Wanderfeldröhre (27) nachgeschalteten Zirkulator (28) enthält, der durch einen Hohlleiter (21) an den Hohlraumresonator (17) angeschlossen ist und einen mit einer Last (30) angeschlossenen Seitenarm (29) aufweist, um die am Zirkulator (28) ankommende reflektierte Leistung von der Wanderfeldröhre (27) abzulenken und in der Last (30) zu vernichten.

10. Vorrichtung nach einem der Ansprüche 6 bis 9, dadurch gekennzeichnet, dass der Hohlraumresonator (17) für die Mikrowellen-Mode $TE_{10x}$ dimensioniert ist, wobei x einen Wert zwischen 11 und 21 hat.

## Claims

1. A method of producing microspheres consisting of at least one compound of a metal with a non-metal, especially oxygen, carbon and/or nitrogen, by internal gelation of droplets of a mixed feed solution which contains an ammonia donor, especially hexamethylenetetramine, in a concentrated metallic salt solution, wherein a jet of cooled mixed feed solution is broken up into drops of substantially equal size, characterised in that the mixed feed drops are subjected in free fall to a radiation field of standing microwaves in the X-ray waveband range which by dielectric heating initiates the gelling, to a degree precluding deformation of the drops when falling into a liquid, and in that the thus gelled drops are introduced for further gelation into a reception liquid consisting of a washing liquid, containing washed-out substances, for the gel microspheres.

2. Method according to claim 1, characterised in that the mixed feed drops are conducted in the radiation field through an area where the electric field component is at a maximum.

3. Method according to claim 1 or 2, characterised in that the mixed feed drops are conducted in the radiation field through a narrow treatment chamber enclosed by a synthetic plastics tube.

4. Method according to one of the preceding claims, characterised in that a radiationfield in the $TE_{10x}$ mode is used, where x has a value between 11 and 21.

5. Method according to one of the preceding claims, characterised in that the gel microspheres caught in the washing liquid are washed in countercurrent in the washing liquid and then dried.

6. Apparatus for carrying out the method according to claim 1, characterised in that a microwave cavity resonator (17) with an upper and a lower closure wall (18 and 19) is arranged between the outlet opening (5) of a drop generator (4) and a reception vessel (8) situated at a distance therebeneath, each closure wall having an opening such that mixed feed drops (7) delivered by the drop generator (4) can pass transversely in free fall through the cavity resonator (17), and the cavity resonator (17) is connected as the load of a microwave apparatus (21...35) working in the X-ray waveband range.

7. Apparatus according to claim 6, characterised in that the cavity resonator (17) contains a synthetic plastics tube (6), preferably of polytetrafluoroethylene, conducted through the openings in the upper and lower walls (18 and 19), which tube is oriented vertically and coaxially with the outlet opening (5) of the drop generator (4) and defines in the cavity resonator (17) a treatment chamber for the mixed feed drops (7) falling through the synthetic plastics tube (6).

8. Apparatus according to claim 6 or 7, characterised in that in the microwave apparatus (21...35) a part of the power reflected in the cavity resonator (17) is withdrawn by means of a directional coupler (31) and fed via at least one attenuator (33, 34) to a power-measuring apparatus (35) and in that the microwave apparatus is set to a working frequency which produces a resonance in the cavity resonator (17) only when the cavity resonator (17) is charged with mixed feed drops (7), the occurrence of resonance being ascertainable at the power-measuring apparatus (35) by a minimum of measured reflected power.

9. Apparatus according to one of claims 6 to 8, characterised in that the microwave apparatus (21...35) contains a microwave generator (25) with an adjusting device (26, 26') for adjusting the working frequency and the output power, a traveling wave tube (27) for the amplification of the power delivered by the microwave generator (25) and a circulator (28) connected after the travelling wave tube (27), which circulator is connected by a hollow conductor (21) to the cavity resonator (17) and comprises a side arm (29) terminating in a load (30), in order to deflect the reflected power arriving at the circulator (28) from the travelling wave tube (27) and dissipate it in the load (30).

10. Apparatus according to one of claims 6 to 9, characterised in that the cavity resonator (17) is dimensioned for the microwave mode $TE_{10x}$, x having a value between 11 and 21.

**Revendications**

1. Procédé de fabrication de microbilles de gel constituées d'au moins un composé d'un métal et d'un élément non métallique, notamment d'oxygène, de carbone et/ou d'azote, par gélification interne de gouttelettes d'une solution de charge mixte qui contient un donneur ou précurseur d'ammoniac, notamment de l'hexaméthylène-tétramine, dans une solution concentrée d'un sel métallique, un jet de solution de charge mixte refroidie étant divisé en gouttes d'une dimension sensiblement constante, caractérisé en ce qu'on soumet les gouttes de charge mixte, en chute libre, à un champ de radiations correspondant à des micro-ondes stationnaires dans une zone de la bande des rayons X, ce champ déclenchant la gélification par chauffage diélectrique jusqu'à un niveau excluant une déformation des gouttes lors de leur chute dans un liquide, et en ce que les gouttes ainsi gélifiées sont amenées à poursuivre leur gélification dans un liquide récepteur formé à partir d'un liquide de lavage prévu pour les microbilles de gel et contenant des substances qui se sont détachées au cours du lavage.

2. Procédé selon la revendication 1, caractérisé en ce que les gouttes de charge mixte sont envoyées dans le champ de radiations par passage dans une zone où la composante d'un champ électrique est maximale.

3. Procédé selon la revendication 1 ou 2, caractérisé en ce que les gouttes de charge mixte sont envoyées dans le champ de radiations en passant à travers un volume de traitement étroit entouré par un tube de matière plastique.

4. Procédé selon l'une des revendications précédentes, caractérisé en ce qu'on utilise un champ de radiations dans le mode $TE_{10x}$, x ayant une valeur comprise entre 11 et 21.

5. Procédé selon l'une des revendications précédentes, caractérisé en ce que les microbilles de gel recueillies dans le liquide de lavage sont lavées à contre-courant dans ce liquide de lavage, puis sont ensuite séchées.

6. Installation de mise en oeuvre du procédé selon la revendication 1, caractérisée en ce qu'il est prévu entre l'orifice de sortie (5) d'un appareil de production de gouttes (4) et un récipient collecteur (8) qui se trouve situé au-dessous à une certaine distance, une cavité résonnante à micro-ondes (17) présentant des parois d'obturation supérieure et inférieure (18 et 19) offrant chacune un orifice, cette cavité résonnante étant disposée de manière que les gouttes de charge mixte (7) fournies par l'appareil (4) puissent traverser en chute libre cette cavité résonnante (17), et en ce que cette cavité (17) est connectée en tant que circuit récepteur d'une installation à micro-ondes (21...35) fonctionnant dans la bande de rayons X.

7. Installation selon la revendication 6, caractérisée en ce que la cavité résonnante (17) comprend un tube (6) en matière plastique, de préférence en polytétrafluoro-éthylène, qui est guidé à travers les orifices ménagés dans les parois d'obturation supérieure et inférieure (18 et 19) et qui est orienté verticalement et de manière coaxiale à l'orifice de sortie (5) de l'appareil de production de gouttes (4), ce tube (6) délimitant dans la cavité résonnante (17) un volume de traitement pour les gouttes de charge mixte (7) qui tombent à travers ce tube (6).

8. Installation selon la revendication 6 ou 7, caractérisée en ce qu'une partie de la puissance réfléchie dans la cavité résonnante (17) est prélevée dans l'installation à micro-ondes (21...35) au moyen d'un coupleur directif (31), cette partie de puissance réfléchie étant envoyée sur un appareil de mesure de puissance (35) par l'intermédiaire d'au moins un atténuateur (33, 34), et en ce que l'installation à micro-ondes est réglée sur une fréquence de fonctionnement qui ne donne une résonance dans la cavité résonnante (17) que lorsque cette cavité résonnante (17) contient des gouttes de charge mixte (7), l'apparition de la résonance pouvant être déterminée sur l'appareil de mesure de puissance (35) grâce à un minimum de la puissance réfléchie mesurée.

9. Installation suivant l'une des revendications 6 à 8, caractérisée en ce que l'installation à micro-ondes (21...35) contient un générateur de micro-ondes (25) muni d'un dispositif de réglage (26, 26') pour le réglage de la fréquence de fonctionnement et de la puissance de sortie, un tube à ondes progressives (27) pour l'amplification de la puissance fournie par ce générateur de micro-ondes (25), et un circulateur (28) connecté derrière ce tube à ondes progressives (27), ce circulateur (28) étant relié à la cavité résonnante (17) par l'intermédiaire d'un guide d'ondes (21) et comprenant un bras latéral (29) raccordé à une résistance de charge (30), afin de dévier du tube à ondes progressives (27) la puissance réfléchie qui parvient sur le circulateur (28) et à l'annuler dans cette résistance de charge (30).

10. Installation selon l'une des revendications 6 à 9, caractérisée en ce que la cavité résonnante (17) est dimensionnée pour le mode de micro-ondes $TE_{10x}$, x ayant une valeur comprise entre 11 et 21.

Fig. 1

Fig. 2